# EUROPÄISCHE PATENTSCHRIFT

(11) **EP 1 656 312 B1**
(45) Veröffentlichungstag und Bekanntmachung des Hinweises auf die Patenterteilung: **27.12.2006**
(21) Anmeldenummer: 04763062.9
(22) Anmeldetag: 01.07.2004
(51) Int. Cl.: B65G 23/08, B65G 23/02

(54) **MOTORBETRIEBENE FÖRDERROLLE, STEUERVORRICHTUNG FÜR EINE MOTORBETRIEBENE FÖRDERROLLE, ROLLENFÖRDERANLAGE UND STEUERVERFAHREN FÜR EINE ROLLENFÖRDERANLAGE**
MOTOR-DRIVEN CONVEYOR ROLLER, CONTROL DEVICE FOR A MOTOR-DRIVEN CONVEYOR ROLLER, ROLLER CONVEYOR INSTALLATION, AND CONTROL METHOD FOR A ROLLER CONVEYOR INSTALLATION
ROULEAU DE TRANSPORT MOTORISE, DISPOSITIF DE COMMANDE DE ROULEAU DE TRANSPORT, SYSTEME DE ROULEAUX DE TRANSPORT ET PROCEDE DE COMMANDE DE SYSTEME DE ROULEAUX DE TRANSPORT

(30) Priorität: 31.07.2003 DE 10336304
(43) Veröffentlichungstag der Anmeldung: 17.05.2006
(60) Teilanmeldung: 06000880.2
(73) Patentinhaber: SSI Schäfer Peem GmbH, 8051 Graz (AT)
(72) Erfinder: SCHÄFER, Gerhard, 57290 Neunkirchen (DE)
(74) Vertreter: Wegener, Markus
(86) Internationale Anmeldenummer: PCT/EP2004/007138
(87) Internationale Veröffentlichungsnummer: WO 2005/019070

(56) Entgegenhaltungen:
- EP-A- 1 118 558
- EP-A- 1 205 409
- WO-A-99/00317
- US-A- 5 088 596
- US-A- 6 035 999
- US-B1- 6 206 181
- "HI-TECH CONVEYER TREATS PACKAGE WITH TLC" MACHINE DESIGN, PENTON,INC. CLEVELAND, US, Bd. 64, Nr. 7, 9. April 1992 (1992-04-09), Seite 18,20, XP000305410 ISSN: 0024-9114

## Beschreibung

Die vorliegende Erfindung betrifft eine motorbetriebene Förderrolle für Förderanlagen zum Fördern von Behältern, Paletten etc., mit einem hohlen Rollenkörper, der in Bezug auf ein Gestell drehbar gelagert ist und innerhalb dessen eine gestellfeste Antriebseinheit angeordnet ist, deren Abtriebswelle über eine Andruckeinheit kraftschlüssig mit dem Innenumfang des Rollenkörpers verbunden ist, wobei die Andruckeinheit eine erste und eine zweite Scheibe aufweist, in die ein elastischer Anpressring eingelegt ist.

Eine solche motorgetriebene Förderrolle ist aus der US-A-5 088 596 bekannt.

Die vorliegende Erfindung betrifft allgemein eine motorbetriebene Förderrolle, eine Steuervorrichtung für eine motorbetriebene Förderrolle, eine Rollenförderanlage sowie ein Verfahren zum Steuern einer Rollenförderanlage.

Rollenförderanlagen dienen zum Transport von Fördergut wie Behältern, Paletten. Im Folgenden ist jede Bezugnahme auf einen Behälter auf jede andere Art von Fördergut gleichermaßen anwendbar.

Eine Rollenförderanlage weist eine Mehrzahl von in Querrichtung ausgerichteten und hintereinander liegenden Rollen auf, von denen zumindest einige angetrieben sind. Durch den Antrieb der Rollen wird das darauf liegende Fördergut in Förderrichtung bewegt.

Derartige Rollenförderanlagen dienen zur Verbindung von unterschiedlichen Stationen eines Lagersystems, bspw. einer Übergabestation zu einem Behälterlager, einer Kommissionierstation, etc.

Von einer Gruppe von hintereinander liegenden Rollen ist in der Regel jeweils nur eine Förderrolle angetrieben. Die anderen Rollen der Gruppe bzw. des Segmentes sind Leerlaufrollen, die über Riemen mit der motorbetriebenen Förderrolle gekoppelt sind.

Zum Antrieb der motorbetriebenen Förderrolle ist es bekannt, an einem Gestell, an dem die Förderrollen drehbar gelagert sind, einen elektrischen Motor anzuordnen, der mit einer Achse der motorbetriebenen Förderrolle gekoppelt ist.

Es sind jedoch auch motorbetriebene Förderrollen bekannt, bei denen eine Antriebseinheit einschließlich eines elektrischen Motors und eines Untersetzungsgetriebes in den Rollenkörper integriert sind (beispielhaft DE 92 05 861 Ul).

Diese bekannte motorbetriebene Förderrolle ist an ihren Enden über Buchsen gelagert. Der Motor ist an einem Motorträger innerhalb des Rollenkörpers festgelegt, wobei der Motorträger als Lagerzapfen ausgebildet ist. Ferner ist der Motorträger mit einem Kanal zur Hindurchführung von elektrischen Leitungen zum Anschluss des elektrischen Motors versehen.

Eine Abtriebswelle der Antriebseinheit im Inneren des Rollenkörpers ist über eine Andruckeinheit kraftschlüssig mit dem Innenumfang des Rollenkörpers verbunden.

Derartige motorbetriebene Förderrollen werden auch als "drive roll" bezeichnet.

Die Ansteuerung derartiger motorbetriebener Förderrollen erfolgt über Steuermodule. Diese erfordern in der Regel eine Gleichspannungsversorgung und bieten die Möglichkeit, die motorbetriebene Förderrolle in Stufen auf unterschiedliche Drehzahlen einzustellen. Hierzu sind an den Steuermodulen in der Regel Kodierschalter wie Dip-Schalter vorgesehen. Auch kann über die Steuermodule die Drehrichtung gewählt werden.

Zur Kopplung mit Leerlaufrollen ist an dem Rollenkörper eine oder mehrere Sicken vorgesehen, um die Riemen geschlungen werden können.

Vor dem obigen Hintergrund ist es die Aufgabe der vorliegenden Erfindung, eine verbesserte motorbetriebene Förderrolle, eine verbesserte Steuervorrichtung für eine solche motorbetriebene Förderrolle, eine verbesserte Rollenförderanlage sowie ein verbessertes Verfahren zum Steuern einer solchen Rollenförderanlage anzugeben.

Diese Aufgabe wird durch eine motorbetriebene Förderrolle gemäß der eingangs erwähnten. Art gelöst, wobei die Andruckeinheit eine erste und eine zweite Scheibe aufweist, die außenumfänglich eine V-Form definieren, in die ein elastischer Anpressring eingelegt ist.

Durch die V-Form lässt sich bei Ausüben einer Axialkraft auf die Scheiben eine Radialkraft auf den elastischen Anpressring erzeugen, um die Andruckeinheit am Innenumfang des Rollenkörpers kraftschlüssig festzulegen.

Bei einer bevorzugten Ausführungsform der motorbetriebenen Förderrolle ist an dem Rollenkörper oder einem damit verbundenen Bauteil (z.B. Buchse) außenumfänglich wenigstens ein W-förmiges Umfangsprofil ausgebildet, um das ein Riemen mit wenigstens zwei innenumfänglichen Keilen (im Folgenden kurz Poly-V™-Riemen genannt) geschlungen werden kann.

Derartige Riemen bilden bei gleicher Breite eine optimale Kontaktfläche für eine höhere Übertragungsleistung.

Ferner werden zum Antrieb der Förderrolle vorzugsweise Riemen benutzt, die auf Grund eines speziellen Kerns eine einmal eingestellte Spannung über die gesamte Lebensdauer aufrechterhalten, so dass Wartungsarbeiten zur Spannungsnachstellung nicht erforderlich sind.

Gemäß einer weiteren bevorzugten motorbetriebenen Förderrolle weist das Umfangsprofil eine Doppel-W-Form auf, um zwei Poly-V™-Riemen aufnehmen zu können.

Hierbei ist eine Kopplung der motorbetriebenen Förderrolle mit zwei Leerlaufrollen auf gegenüberliegenden Seiten möglich.

Gemäß einer weiteren bevorzugten Ausführungsform ist das Bauteil, an dem das W-förmige Umfangsprofil ausgebildet ist, eine Buchse, die in ein Ende des Rollenkörpers eingesteckt und damit starr verbunden ist.

Hierdurch lässt sich die W-förmige Profilierung separat an dem Bauteil herstellen.

Von besonderem Vorteil ist dabei, wenn das Bauteil aus Kunststoff hergestellt ist, so dass sich ein geringes Gewicht ergibt.

Gemäß einer weiteren bevorzugten Ausführungsform weist die Antriebseinheit einen elektrischen Motor und ein Getriebe auf, dessen Eingang mit der Abtriebswelle des elektrischen Motors verbunden ist und dessen Abtriebswelle mit der Andruckeinheit drehfest verbunden ist.

Dadurch ist es möglich, einen schnell laufenden elektrischen Motor zu verwenden, dessen Drehzahl über das Getriebe vorzugsweise untersetzt wird, um angemessene Drehzahlen der Förderrolle zu erzielen.

Gemäß einem bevorzugten Ausführungsbeispiel ist dabei die Abtriebswelle des Getriebes als Konuszapfen mit einem Innengewinde ausgebildet.

Hierdurch ist es möglich, die Andruckeinheit so mit der Abtriebswelle des Getriebes zu verbinden, dass sich die Andruckeinheit bei der Montage innerhalb des Rollenkörpers von selbst in dessen Axialrichtung zentriert.

Dabei ist es von besonderem Vorteil, wenn die Scheiben auf die außenumfänglich konische Abtriebswelle des Getriebes gesteckt sind und eine in deren Innengewinde geschraubte Schraube die Scheiben an der Abtriebswelle festlegt und den Anpressring hierbei radial gegen den Innenumfang des Rollenkörpers drückt.

Gemäß einer besonders bevorzugten Ausführungsform ist der elektrische Motor ein bürstenloser Gleichstrommotor. Ein derartiger Motor ist über seine Lebensdauer wartungslos.

Von weiterem Vorteil ist es, wenn der elektrische Motor in den Rotor integrierte Magnete aufweist.

Hierdurch lässt sich eine hohe Leistung bei vergleichsweise kleinem Außendurchmesser des elektrischen Motors erzielen.

Ferner ist es vorteilhaft, wenn die Antriebseinheit einen elektrischen Motor aufweist, dessen Drehzahl innerhalb eines bestimmten Drehzahlbereiches einstellbar ist.

Hierdurch ist es möglich, die motorbetriebene Förderrolle für unterschiedliche Fördergeschwindigkeiten einzurichten.

Weiterhin ist es vorteilhaft, wenn die Antriebseinheit ein Getriebe aufweist, das eine feste Übersetzung aufweist.

Hierdurch kann das Getriebe kompakt aufgebaut werden.

Von besonderem Vorteil ist es dabei, wenn die Antriebseinheit ein Getriebe aufweist, das einen Planetenradsatz mit einem Hohlrad aus Kunststoff und Planetenrädern aus Messing aufweist.

Hierdurch wird ein besonders hoher Kompromiss an Dauerhaltbarkeit und geringem Laufgeräusch erzielt.

Dies gilt umso mehr, wenn das Hohlrad schräg verzahnt ist.

Bei der erfindungsgemäßen Steuervorrichtung ist es vorteilhaft, wenn in dem Gehäuse eine Mehrzahl von Steuereinheiten zum Ansteuern jeweiliger elektrischer Motoren einer entsprechenden Mehrzahl von Förderrollen angeordnet ist, wobei die Steuereinheiten von dem Wechselstrom/Gleichstrom-Wandler (z.B. ein Netzteil) versorgt werden.

Hierdurch ist es möglich, die Steuervorrichtung über reguläre Netzleitungen (z.B. 220 Volt) versorgen. Die vergleichsweise hohen Kosten für den Wechselstrom/Gleichstrom-Wandler werden dabei auf die einzelnen Steuereinheiten verteilt.

Bei höheren Leistungen können die Versorgungsleitungen für die Steuervorrichtung (also in der Regel die Netzleitung) mit deutlich geringerem Querschnitt ausgeführt werden als die sonst üblichen Gleichstromversorgungsleitungen.

Gemäß einer weiteren bevorzugten Ausführungsform weist jede Steuereinheit (d.h. die eine Steuereinheit oder mehrere Steuereinheiten der bevorzugten Ausführungsform) jeweils einen Codierschalter zur Einstellung der Drehzahl des elektrischen Motors auf einen festen Wert auf.

Hierdurch lässt sich die Drehzahl der motorbetriebenen Förderrolle je nach Anwendungsfall einstellen. Der Codierschalter kann bspw. ein Dip-Schalter sein und kann auch dazu geeignet sein, die Drehrichtung einzustellen.

Ferner ist es vorteilhaft, wenn an dem Gehäuse eine Busschnittstelle vorgesehen ist, die mit der bzw. den Steuereinheit(en) in Verbindung steht.

Durch diese Maßnahme ist es möglich, die Steuervorrichtung (und deren Steuereinheit(en)) mit einer übergeordneten Steueranlage (z.B. SPS oder Ähnliches) über eine Busstruktur zu verbinden. Hierdurch ist es möglich, die Steuereinheit(en) zu parametrisieren, bspw. hinsichtlich Geschwindigkeit, Hochdreh-Beschleunigung, etc. Ferner ist es auch möglich, eine übergeordnete Förderstrategie zu implementieren, indem mehrere derartiger Steuervorrichtungen über das Busnetz geeignet angesteuert werden.

Dabei ist es von besonderem Vorteil, wenn jede Steuereinheit dazu ausgelegt ist, über die Busschnittstelle eine Drehzahl zu empfangen (in der Regel in kodierter Form) und den jeweiligen elektrischen Motor auf die empfangene Drehzahl einzustellen.

Hierbei kann die Drehzahl der angeschlossenen motorbetriebenen Förderrolle von einer übergeordneten Steueranlage zentral eingestellt, justiert, bzw. optimiert werden.

Gemäß einer weiteren bevorzugten Ausführungsform weist jede Steuereinheit einen Sensoreingang für einen Sensor auf, der der jeweiligen Förderrolle zugeordnet ist.

Der Sensor ist vorzugsweise ein Belegungssensor, der erkennt, ob sich oberhalb der motorbetriebenen Förderrolle bzw. kurz davor ein Behälter befindet. Der Sensor kann jedoch auch ein beliebiger anderer Typ von Sensor sein, der den Betrieb der Steuervorrichtung steuert.

Von besonderem Vorteil ist es, wenn der Sensor ein optischer Sensor, insbesondere ein Optokoppler ist.

Dabei ist es ferner von besonderem Vorteil, wenn jede Steuereinheit dazu ausgelegt ist, den zugeordneten elektrischen Motor in Abhängigkeit von dem Sensor an- und abzuschalten.

Hierdurch ist es möglich, die motorbetriebene Förderrolle nur dann in Betrieb zu setzen, wenn dies notwendig ist. Hierdurch wird der Geräuschpegel einer so implementierten Rollenförderanlage verringert. Der Energieverbrauch wird reduziert.

Besonders vorteilhaft ist es dabei, wenn jede Steuereinheit dazu ausgelegt ist, den zugeordneten elektrischen Motor bei Empfang eines Sensorsignals von dem Sensor anzuschalten.

Hierdurch wird die motorbetriebene Förderrolle dann angeschaltet, wenn ihr Betrieb notwendig ist, also wenn der Sensor bspw. erkannt hat, dass ein Behälter auf sie zu gefördert wird.

Gemäß einer weiteren bevorzugten Ausführungsform ist jede Steuereinheit dazu ausgelegt, den zugeordneten elektrischen Motor eine vorbestimmte oder eine einstellbare Zeitspanne (bspw. über die Busschnittstelle einstellbar) nach Empfang eines Sensorsignals von dem Sensor abzuschalten. Hierdurch wird gewährleistet, dass die motorbetriebene Förderrolle nur so lange in Betrieb ist, so lange ein Behälter zu fördern ist.

Möglich ist es auch, das Abschalten der motorbetriebenen Förderrolle über einen nachgeschalteten Sensor einzuleiten, also dann, wenn über den Sensor festgestellt wird, dass sich kein Behälter mehr über der motorbetriebenen Förderrolle (bzw. über damit gekoppelten Leerlaufrollen) befindet.

Auch ist es vorteilhaft, wenn jede Steuereinheit dazu ausgelegt ist, bei einem Blockieren der zugeordneten Förderrolle den elektrischen Motor abzuschalten.

Dies kann bspw. über eine Messung des Motorstroms erfolgen. Falls dieser einen bestimmten Schwellenwert überschreitet, wird der elektrische Motor abgeschaltet, da dann davon ausgegangen wird, dass die Förderrolle blockiert ist.

Dabei ist es ferner von Vorteil, wenn jede Steuereinheit dazu ausgelegt ist, eine vorbestimmte Zeitdauer nach Abschalten des Motors auf Grund einer Blockade der Förderrolle den elektrischen Motor wieder einzuschalten.

Hierdurch wird eingerichtet, dass die Steuereinheit regelmäßig erneut versucht, die motorbetriebene Förderrolle in Gang zu setzen. Wenn die Blockade der Förderrolle beseitigt ist, setzt die motorbetriebene Förderrolle ihren Fördervorgang ganz normal fort. Falls die Blockade weiterhin vorhanden ist, wird der elektrische Motor sofort wieder abgeschaltet. Nach Ablauf der vorbestimmten Zeitdauer wird dann wieder versucht, diesen Einzuschalten.

Die vorbestimmte Zeitdauer liegt dabei in vorteilhafter Weise im Bereich zwischen 0,5 und 10 Sekunden, vorzugsweise im Bereich von 2 bis 5 Sekunden (z.B. 3 Sekunden).

Auch ist es vorteilhaft, wenn jede Steuereinheit einen Störausgang zur Verbindung mit einer übergeordneten Steueranlage aufweist.

Falls innerhalb der Steuereinheit ein Fehler auftritt (bspw. ein Ausfall des elektrischen Motors, eine fortgesetzte Blockade der Förderrolle, etc.), wird ein Störsignal eingeschaltet (bspw. über ein Relais). Dieses kann dann zu einer übergeordneten Steueranlage geleitet werden, um einer Bedienperson eine Störung anzuzeigen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Seitenansicht einer erfindungsgemäßen motorbetriebenen Förderrolle;
- Fig. 2: eine Längsschnittansicht der Förderrolle der Fig. 1;
- Fig. 3: eine perspektivische Ansicht einer erfindungsgemäßen motorbetriebenen Förderrolle;
- Fig. 4: eine perspektivische Teilschnittansicht eines Getriebes der motorbetriebenen Förderrolle der Fig. 3;
- Fig. 5: eine Längsschnittansicht einer Andruckeinheit einer erfindungsgemäßen motorbetriebenen Förderrolle;
- Fig. 6: eine perspektivische Ansicht von hinten eines Motorträgers;
- Fig. 7: eine perspektivische Ansicht des Motorträgers der Fig. 6 von der Seite gesehen;
- Fig. 8: eine Seitenansicht des Motorträgers der Figuren 6 und 7;
- Fig. 9: eine Längsschnittansicht durch eine weitere Ausführungsform einer motorbetriebenen Förderrolle gemäß der Erfindung, in Form einer Konusrolle;
- Fig. 10: eine Längsschnittansicht einer Lagerbuchse für eine motorbetriebene Förderrolle gemäß der vorliegenden Erfindung;
- Fig. 11: ein Detail XI der Fig. 10;
- Fig. 12: eine schematische Ansicht in Form eines Blockdiagramms einer erfindungsgemäl3en Steuervorrichtung für eine motorbetriebene Förderrolle;
- Fig. 13: eine Draufsicht auf eine erfindungsgemäße Rollenförderanlage;
- Fig. 14: eine schematische Darstellung zur Erläuterung des erfindungsgemäßen Steuerverfahrens für eine Rollenförderanlage.

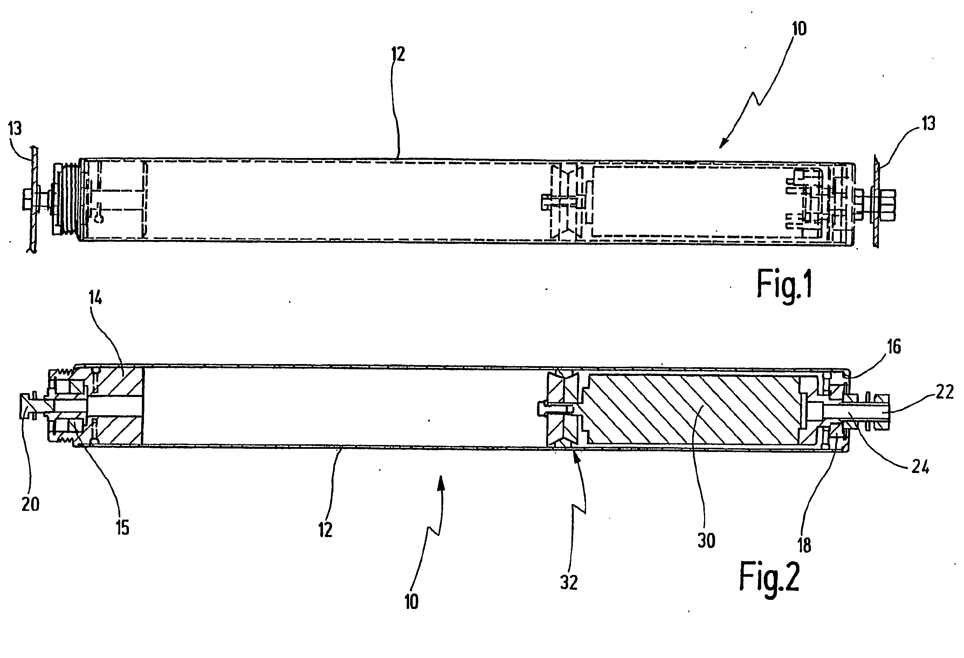

In den Figuren 1 und 2 ist eine erste Ausführungsform einer erfindungsgemäßen motorbetriebenen Förderrolle generell mit 10 bezeichnet.

Die Förderrolle 10 weist einen rohrförmigen hohlen Rollenkörper-12 auf, der bspw. aus einem verzinkten Präzisionsrohr bestehen kann.

Der Rollenkörper 12 ist an einem schematisch angedeuteten Gestell 13 drehbar gelagert.

Zu diesem Zweck weist die Förderrolle 10 eine erste Buchse 14 auf, die in ein Ende des Rollenkörpers 12 eingesteckt und damit starr verbunden ist. Die Buchse 14 nimmt ein Lager 15 auf, das an einem Zapfen 20 des Gestells 13 drehbar gelagert ist.

An dem gegenüberliegenden Ende weist die Förderrolle 10 eine zweite Buchse 16 auf, die über ein Lager 18 an einem Lagerelement 22 in Form eines Motorträgers gelagert ist. Der Motorträger 22 ist starr mit dem Gestell 13 verbunden und weist einen das Innere des Rollenkörpers 12 mit der Außenseite verbindenden Kanal 24 auf.

Im Inneren des Rollenkörpers 12 ist, benachbart zu dem Motorträger 22, eine Antriebseinheit 30 angeordnet, die generell eine zylindrische Form besitzt. Die Antriebseinheit 30 ist an ihrem der Buchse 16 zugewandten Ende starr mit dem Motorträger 22 verbunden.

An dem gegenüberliegenden Ende ist die Antriebseinheit 30 mit einer Abtriebswelle versehen, die mit einer Andruckeinheit 32 verbunden ist. Die Andruckeinheit 32 ist mit dem Innenumfang des Rollenkörpers 12 in Umfangsrichtung kraftschlüssig verbunden.

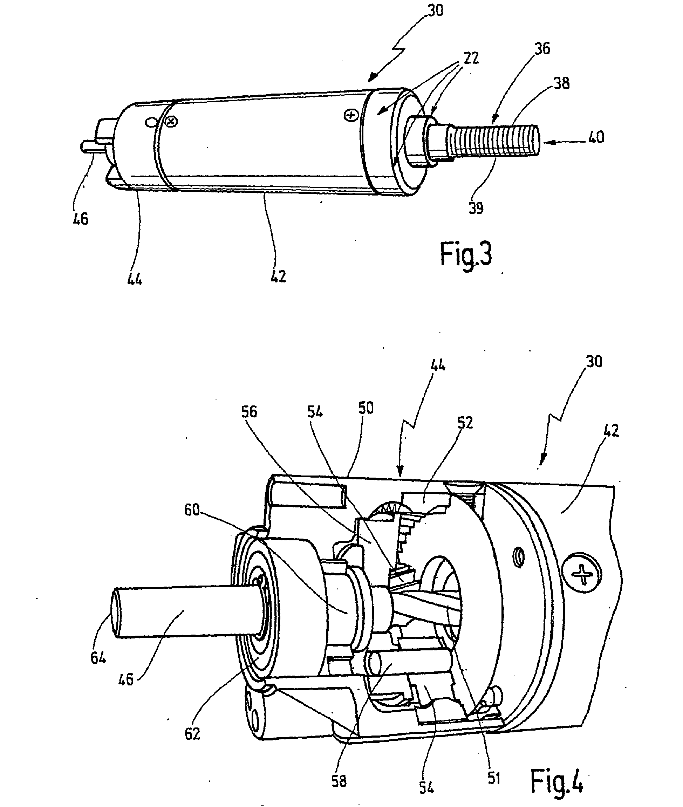

In den Figuren 3 und 4 ist die Antriebseinheit 30 in größerer Genauigkeit dargestellt.

Der Motorträger 22 weist einen Hohlzapfen 36 mit einem Außengewinde 38 auf, mittels dessen der Motorträger 22 mit dem Gestell 13 verbindbar ist. Ferner ist an dem Außenumfang des Hohlzapfens 36 eine Abflachung 39 vorgesehen, um eine bessere Drehmomentabsttitzung zu erzielen.

Die Antriebseinheit 30 weist ferner einen elektrischen Motor 42 in Form eines bürstenlosen Gleichstrommotors auf, der an den Motorträger 22 angeflanscht ist.

An dem gegenüberliegenden Ende des elektrischen Motors 42 ist ein Getriebe 44 angeflanscht, dessen Abtriebswelle 46 mit der Andruckeinheit 32 verbunden ist.

Das Getriebe 44 weist ein Gehäuse 50, bspw. aus Zink-Druckgizss, auf, das generell hohlzylindrisch ausgebildet ist..

Eine Abtriebswelle 51 des elektrischen Motors 42 ragt in das Gehäuse 50 hinein.

Am Innenumfang des Gehäuses 50 ist ein Hohlrad 52 aus einem Kunststoff, wie z.B. POM, festgelegt. Das Hohlrad 52 ist schräg verzahnt.

Das Hohlrad 52 ist Bestandteil eines Planetenradsatzes, dessen Planetenräder 54 mit der Abtriebswelle 51 des elektrischen Motors 42 kämmen. Die Planetenräder 54 sind vorzugsweise aus Messing hergestellt und wie das Hohlrad 52 schräg verzahnt.

Ein Planetenträger 56 des Planetenradsatzes lagert die Planetenräder 54 über jeweilige Stahl-Lagernadeln 58, die gehärtet und gleitgeschliffen sein können.

Die Abtriebswelle 51 des elektrischen Motors 42 bildet ein Sonnenrad.

Der Planetenträger 56 ist als neben dem Hohlrad 52 ausgebildete Scheibe ausgebildet, die drehfest mit der Abtriebswelle 46 verbunden ist. Die Abtriebswelle ist über ein Sinterlager 60 mit Lebensdauerschmierung und ein Kugellager 62 (gedichtet) gelagert.

Die Abtriebswelle 46 ist gehärtet und geschliffen und weist außenumfänglich zumindest abschnittsweise eine Konusform auf.

Ferner ist die Abtriebswelle mit einer stirnseitigen Bohrung mit Innengewinde 64 versehen.

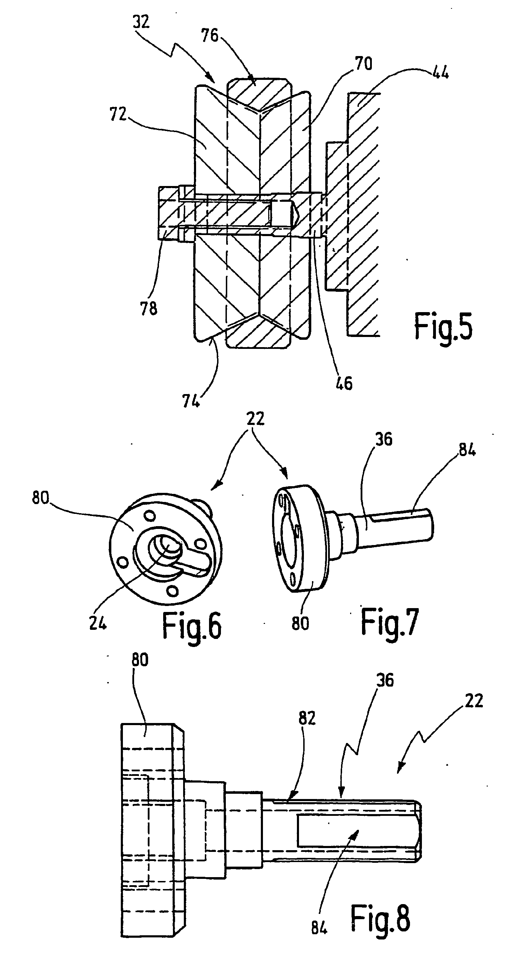

In Fig. 5 ist die Anbindung der Andruckeinheit 32 an die Abtriebswelle 46 dargestellt.

Die Andruckeinheit 32 weist eine erste Scheibe 70 und eine zweite Scheibe 72 auf, die gemeinsam einen V-Umfang 74 definieren. Um den V-Umfang 74 ist ein Anpressring 76 aus einem elastischen Material (z.B. PUR) gelegt.

In das Innengewinde 64 ist eine Schraube 78 geschraubt, die dazu ausgelegt ist, die Scheiben 70, 72 auf die konische Abtriebswelle 46 zu schieben und daran zusammenzupressen. Dabei wird zwischen der Scheibe 70 und der Abtriebswelle 46 eine in Umfangsrichtung kraftschlüssige Presspassung eingerichtet. Die andere Scheibe 72 ist auf Grund der Konusform hingegen axial auf der Abtriebswelle 46 beweglich gehalten.

Zur Montage der Antriebseinheit 30 und der Andruckeinheit 32 wird diese vor Einsetzen der Buchse 16 in den Rollenkörper 12 eingeschoben. Anschließend wird die Buchse 16 mit dem Lager 18 an dem Hohlzapfen 36 montiert. Die Anordnung aus Antriebseinheit 30 und Buchse 16 mit Lager 18 kann jedoch auch vormontiert sein.

In dem eingeschobenen Zustand sind die Scheiben 70, 72 voneinander beabstandet, so dass der Anpressring 76 sich mit Spiel in den Innenumfang des Rollenkörpers 12 einführen lässt.

Anschließend wird über das gegenüberliegende Ende des Rollenkörpers 12 die Schraube 78 festgezogen. Hierbei wird die Scheibe 72 gegen die Scheibe 70 gedrückt. Durch den V-Umfang 74 wird der Anpressring 76 komprimiert und radial nach außen gedrückt, so dass schließlich zum einen ein Presssitz der Scheibe 70 auf der Abtriebswelle 46 erzielt wird. Gleichzeitig drückt der Anpressring 76 von innen umfänglich gegen das Innere des Rollenkörpers 12 und bildet so einen Kraftschluss zwischen der Abtriebswelle 46 und dem Rollenkörper 12.

Ferner wird hierdurch die Abtriebswelle 46 der Antriebseinheit 30 im Inneren des Rollenkörpers 12 gelagert, so dass sich der Rollenkörper 12 berührungsfrei in Bezug auf das Gehäuse der Antriebseinheit 30 drehen lässt.

Der Motorträger 22 weist einen Flanschabschnitt 80 auf, der mit dem elektrischen Motor 42 verbunden ist. Ferner weist der Motorträger 22 den Kanal 24 in Form einer zentralen Bohrung und die Abflachung 84 (Bezugsziffer 39 in Fig. 3) auf, wie es den Figuren 6, 7 und 8 zu entnehmen ist.

Ferner weist der Hohlzapfen des Motorträgers 32.ein Außengewinde 82 auf (das in Fig. 3 mit 38 bezeichnet ist).

Der elektrische Motor ist, wie gesagt, ein bürstenloser, dreiphasiger Gleichstrommotor mit Innenläufer. Dabei sind Magnete in den Rotor (d.h. den Läufer) integriert.

Ferner sind in den elektrischen Motor 42 drei Hall-Sensoren integriert, die zur Drehzahlregelung verwendet werden.

In den Motorträger 22 lässt sich eine Steckerbuchse integrieren, die von innen die elektrischen Anschlüsse des elektrischen Motors 42 aufnimmt und von außen (d.h. über die Stirnseite des Hohlzapfens 36) mit einem Stecker verbunden werden kann, der den elektrischen Motor 42 mit einer Steuervorrichtung verbindet.

Der elektrische Motor 42 ist in seiner Drehzahl einstellbar, bspw. in einem Drehzahlbereich von etwa 1000 bis 7000 Umdrehungen pro Minute.

Dabei kann der elektrische Motor eine Abgabeleistung von 43 Watt und eine Bremsleistung von ca. 80 Watt besitzen. Das Abgabemoment kann im Bereich von 0,1 Nm liegen, das Spitzenmoment bei 0,27 Nm.

Das Getriebe 44 ist mit einer festen Übersetzung von i = 9:1 ausgestattet.

Der Motorträger 22 ist vorzugsweise aus Automatenstahl hergestellt.

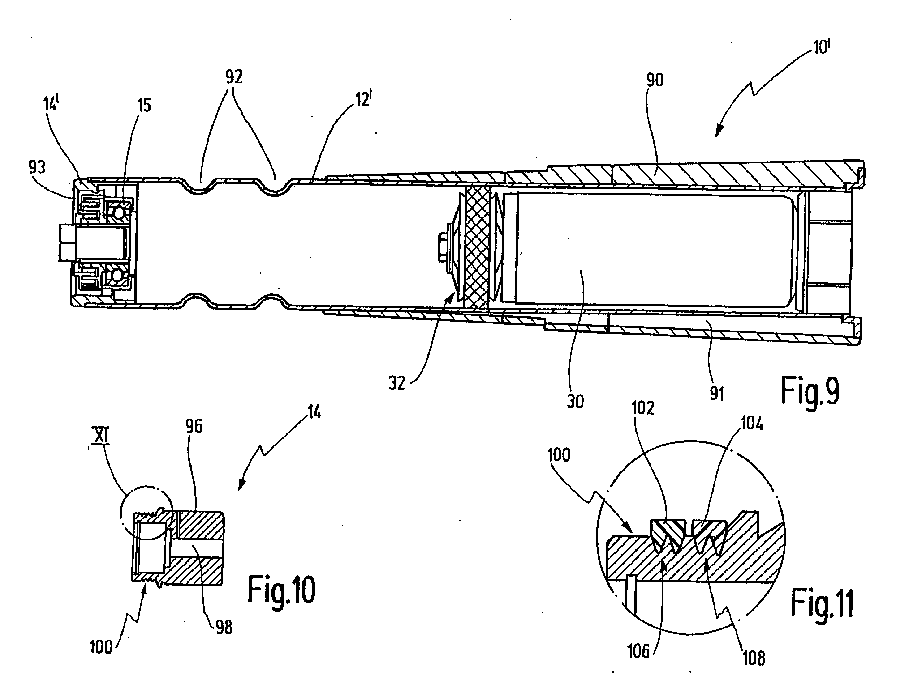

In Fig. 9 ist eine alternative Ausführungsform einer erfindungsgemäßen motorbetriebenen Förderrolle generell mit 10' bezeichnet.

Die Förderrolle 10' entspricht in ihrem Aufbau und in ihrer Funktion der Förderrolle 10, so dass nachstehend lediglich auf die Unterschiede eingegangen wird.

Die Förderrolle 10' weist einen generell rohrförmigen Rollenkörper 12' auf. Über einen Außenabschnitt des Rollenkörpers 12' ist ein konusförmiger Mantel gestülpt, so dass die Förderrolle 10' generell als Konusrolle ausgebildet ist.

Der Mantel 90 kann aus Vollmaterial bestehen oder als Konusrohr mit radialen Stegen 91 ausgebildet sein, wie in Fig. 9 dargestellt.

In einem von dem Mantel 90 nicht abgedeckten Abschnitt des Rollenkörpers 12' sind zwei umlaufende Sicken 92 ausgebildet, die zur Aufnahme von Riemen zur Kopplung mit Leerlaufrollen ausgebildet sind.

Die Buchse 16' beinhaltet eine Dichtung 93, die das Innere des Rollenkörpers 12' einschließlich des Lagers 15 gegenüber der Umgebung abdeckt. Es versteht sich, dass auch die Förderrolle 10 der Figuren 1 bis 8 mit einer derartigen Dichtung in den Buchsen 14, 16 ausgestattet sein kann.

In den Figuren 10 und 11 ist die Buchse 14 der Figuren 1 und 2 in größerer Genauigkeit dargestellt.

Die Buchse 14 weist einen zylindrischen Einführabschnitt 96 zum Einführen in das Innere des Rollenkörpers 12 auf. Die Verbindung zu dem Rollenkörper 12 kann bspw. mittels Madenschrauben oder Ähnlichem erfolgen.

Ferner weist die Buchse 14 eine Axialbohrung 98 auf.

Die Buchse 14 ist so ausgebildet, dass ein axial gegenüber dem Rollenkörper 12 hervorstehender Mitnahmeabschnitt 100 vorgesehen ist. Innerhalb des Mitnahmeabschnittes 100 kann eine erweiterte Öffnung zur Aufnahme von Lager 15 und/oder Dichtung 93 vorgesehen sein.

Am Außenumfang des Mitnahmeabschnittes 100 sind zwei in Axialrichtung nebeneinander liegende W-Profile 106, 108 vorgesehen, die zur Aufnahme eines jeweiligen Poly-V-Riemens 102, 104 ausgebildet sind, die bspw. von der Firma Hutchinson verfügbar sind.

Es versteht sich, dass anstelle eines W-Profils auch ein Mehrfach-v-Profil am Außenumfang der Buchse 14 ausgebildet sein kann, um Poly-V-Riemen mit mehr als zwei V-förmigen Innenkeilen aufnehmen zu können.

Die Poly-V-Riemen 102, 104 besitzen gegenüber herkömmlichen Riemen eine vergrößerte Anlagefläche in Bezug auf die Förderrolle 10. Hierdurch lassen sich höhere. Drehmomente übertragen. Ferner ist in den Poly-V-Riemen 102, 104 in der Regel ein innenliegender Träger bzw. Kern aufgenommen, der über seine Lebensdauer keinen wesentlichen Abfall der Spannung des Riemens gewährleistet. Hierdurch ist der Poly-V-Riemen über die Lebensdauer im Wesentlichen wartungsfrei.

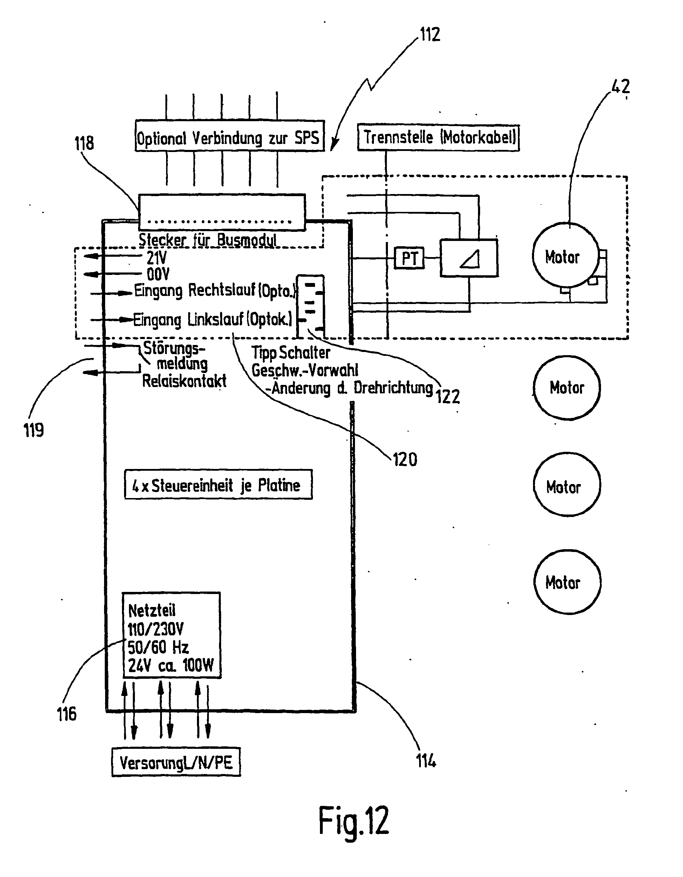

In Fig. 12 ist eine Ausführungsform einer erfindungsgemäßen Steuervorrichtung für vier motorbetriebene Förderrollen 10 generell mit 112 bezeichnet.

Die Steuervorrichtung 112 weist ein Gehäuse 114 auf, in dem ein Wechselstrom/Gleichstrom-Wandler in Form eines Netzteiles 116 aufgenommen ist. Das Netzteil dient zur Umwandlung von üblicher Netzspannung (110/230 Volt) in eine Gleichspannung von z.B. 24 Volt.

Ferner ist an dem Gehäuse 114 eine Busschnittstelle 118 zur optionalen Verbindung zu einer übergeordneten Steueranlage (z.B. SPS) vorgesehen. Die Busschnittstelle kann für jeden beliebigen Bustyp ausgelegt sein, vorzugsweise für den Profibus.

Ferner weist die Steuervorrichtung 112 vier Steuereinheiten 120 zum Ansteuern von vier elektrischen Motoren 42 jeweiliger motorbetriebener Förderrollen 10 auf. Es versteht sich jedoch, dass die Steuervorrichtung im Grunde auch nur eine Steuereinheit 120 aufweisen kann, oder eine beliebige anderen Anzahl von Steuereinheiten 120.

In Fig. 12 ist aus Gründen einer übersichtlichen Darstellung lediglich eine Steuereinheit 120 dargestellt.

Ferner ist an dem Gehäuse 114 ein Störsignal-Terminal 119 vorgesehen. Falls innerhalb der Steuervorrichtung 112 eine Störung auftritt, wird über das Störsignal-Terminal 119 ein Störsignal abgesetzt. Dies erfolgt in der bevorzugten Ausführungsform über einen Relaiskontakt, der zwei von der übergeordneten Steueranlage zu der Steuervorrichtung 112 führende Leitungen kurzschließt.

Jede Steuereinheit 120 weist einen Dip-Schalter 122 zur Einstellung von unterschiedlichen Geschwindigkeitsstufen (Geschwindigkeitsvorwahl) sowie zur Einstellung der Drehrichtung des Motors 42 auf.

Es versteht sich, dass der Dip-Schalter 122 in üblicher Weise mit einem Widerstandsnetzwerk oder Ähnlichem verbunden sein kann, um den Motor 42 je nach Geschwindigkeitsvorwahl mit unterschiedlichen Spannungen zu versorgen.

Ferner weist jede Steuereinheit 120 einen Versorgungsausgang zur elektrischen Versorgung eines zugeordneten Sensors sowie zwei Eingänge zum Zuführen von Sensorsignalen auf (in Fig. 12 nicht näher bezeichnet). Einer der Eingänge ist für den Rechtslauf, der andere für den Linkslauf des Motors 42 ausgebildet.

Der Sensor kann vorzugsweise ein optischer Sensor sein, bspw. ein Optokoppler.

Das Netzteil 116 dient zur gemeinschaftlichen Versorgung der Steuereinheiten 120 der Steuervorrichtung 112 sowie zur Versorgung der angeschlossenen Sensoren.

Es versteht sich, dass die Steuervorrichtung 112 ohne Verbindung zu einer übergeordneten Steueranlage betrieben werden kann, also ohne Busanbindung.

In diesem Fall wird die Geschwindigkeit des Motors 42 vor Inbetriebnahme über den Dip-Schalter 122 voreingestellt.

Über den jeder Steuereinheit 120 zugeordneten Sensor ist es möglich, den Motor 42 bedarfsgerecht an- und auszuschalten.

Zur Erläuterung wird im Folgenden davon ausgegangen, dass eine motorbetriebene Förderrolle 10 gemeinsam mit ggf. daran gekoppelten Leerlaufrollen ein Fördersegment bildet.

Fährt kein Behälter über das Fördersegment (keine Sensoraktivierung), so wird das Fördersegment nach einer kurzen Verzögerung automatisch abgeschaltet. Diese automatische Abschaltung erfolgt in der jeweiligen Steuereinheit 120. Alternativ ist es auch möglich, an der Steuereinheit 120 eine Logik vorzusehen, die das Fördersegment auf Grund einer Sensoraktivierung abschaltet (dann, wenn der Sensor dem Fördersegment in Förderrichtung nachgeschaltet ist).

In der Regel wird die Steuereinheit 120 jedoch mit Verzögerungsabschaltung realisiert. Die Reaktivierung erfolgt dann über einen eigenen Sensor des Fördersegmentes (der an die Steuereinheit 120 angeschlossen ist) und dem Fördersegment in Förderrichtung vorgeschaltet ist. Alternativ folgt die Reaktivierung über ein vorhergehendes Fördersegment.

Die Vorteile der segmentautarken Ein- und Ausschaltung je nach Bedarf sind ein geringerer mechanischer Verschleiß und somit eine längere Lebensdauer. Es ergibt sich eine geringere Lärmentwicklung und ein geringerer Energiebedarf.

Die motorbetriebene Förderrolle und die damit ggf. verbundenen Leerlaufrollen können für ein Fördergewicht bis 50 kg ausgelegt sein. Damit können Geschwindigkeiten im Bereich zwischen 0,3 Meter pro Sekunde und zwei Meter pro Sekunde realisiert werden. Es ist eine stufenlose oder gestufte Geschwindigkeitseinstellung möglich. Nur ein Motortyp ist für den gesamten Geschwindigkeitsbereich notwendig. Eine Leistungssteigerung ist nachträglich mit geringem Aufwand realisierbar, eine Erhöhung der Geschwindigkeit ebenfalls, auch bei nicht intelligenter Steuerung.

Ferner sind die Steuereinheiten 120 jeweils dazu ausgelegt, die motorbetriebenen Förderrollen 10 aktiv zu bremsen, wobei der jeweilige elektrische Motor 42 in den Generatorbetrieb geschaltet wird.

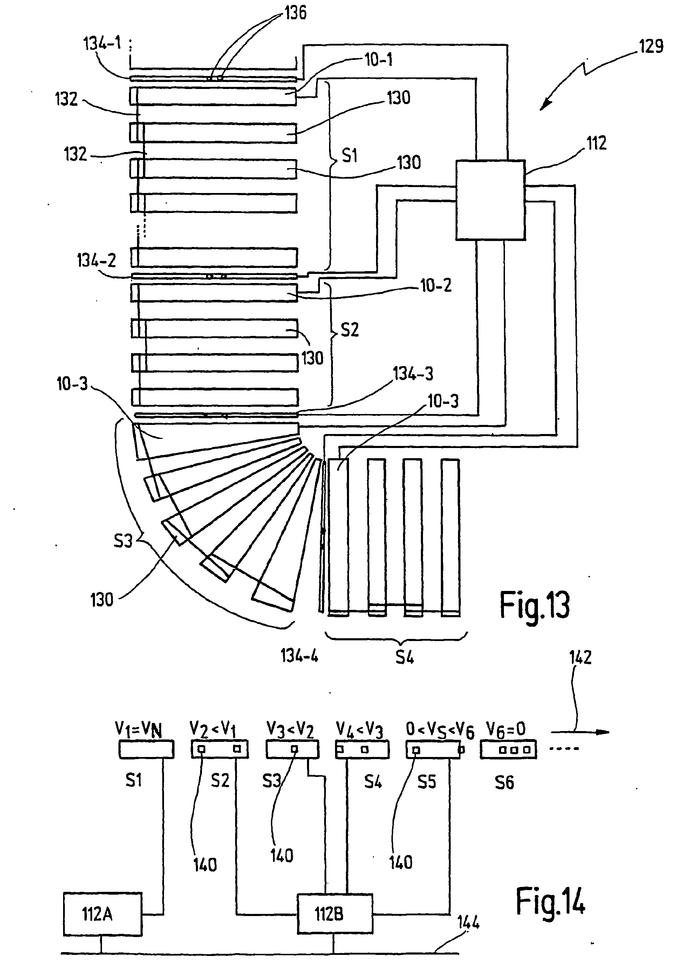

Fig. 13 zeigt eine schematische Draufsicht auf eine erfindungsgemäße Rollenförderanlage 129.

Die Rollenförderanlage 129 weist vier Fördersegmente S1, S2, S3, S4 auf. Die Fördersegmente S1, S2, S4 sind mit zylindrischen Förderrollen versehen. Das Fördersegment S3 ist mit konischen Förderrollen ausgestattet.

Jedes Fördersegment weist eine motorbetriebene Förderrolle 10 auf, die mit jeweiligen Leerlaufrollen 130 gekoppelt ist, und zwar über Riemen 132.

Die motorbetriebenen Förderrollen 10 bestehen vorzugsweise aus den motorbetriebenen Förderrollen 10, 10' der Figuren 1 bis 11. Es können jedoch auch andere Arten von motorbetriebenen Förderrollen eingesetzt werden.

Die motorbetriebenen Förderrollen 10 der Segmente S1, S4 sind mit einer Steuervorrichtung 112 verbunden. Diese kann bspw. durch die in Fig. 12 dargestellte Steuervorrichtung 112 gebildet sein.

Ferner ist jedem Fördersegment S1 bis S4 eine Sensorleiste zugeordnet, die zwischen einer Leerlaufrolle eines vorangegangenen Fördersegmentes und der jeweiligen motorbetriebenen Förderrolle angeordnet ist. Die Sensorleisten sind in Fig. 13 mit 134 bezeichnet. Die Sensorleisten 134 weisen jeweils einen optischen Sensor in Form eines Optokopplers 136 auf, der erkennen kann, ob über der jeweiligen Sensorleiste 134 ein Behälter angeordnet ist oder nicht. Die Sensoren 136 sind mit der Steuervorrichtung 112 verbunden.

Sobald ein Behälter bspw. die Sensorleiste 134-1 überfährt, wird die unmittelbar nachgeschaltete motorbetriebene Förderrolle 10-1 eingeschaltet (und dreht sich mit einer vorgegebenen Geschwindigkeit). Über die Koppelriemen 132 werden auch die Leerlaufrollen 130 angetrieben. Der Behälter wird demzufolge mittels des Fördersegmentes S1 in Förderrichtung hin zu dem nächsten Fördersegment S2 gefördert. Bei Überfahren der nachfolgenden Sensorleiste 134-2 wird das Fördersegment S2 eingeschaltet, usw. Die Steuervorrichtung 112 sorgt ebenfalls dafür, dass die motorbetriebenen Förderrollen 10 eine vorbestimmte Zeit nach Überfahren durch einen Behälter abgeschaltet werden. Hierdurch wird eine bedarfsgerechte segmentautarke Ein- und Ausschaltung realisiert.

In Fig. 4 ist schematisch eine weitere Rollenförderanlage mit einer Mehrzahl von hintereinander geschalteten Fördersegmenten S1 bis S6 dargestellt.

Über die Segmente S1 bis S6 werden Behälter 140 in einer Förderrichtung 142 gefördert.

Jeweils vier Fördersegmente sind einer Steuervorrichtung 112 zugeordnet. Die Steuervorrichtungen (in Fig. 14: 112A und 112B) sind über einen Bus 144 (z.B. Profibus) untereinander verbunden.

Falls bei einem Fördersegment ein Stau auftritt (wie es schematisch beim Fördersegment S6 dargestellt ist), kann die Fördergeschwindigkeit dieses Segments herabgesetzt sein, bspw. auf V₆ = 0.

Um zu vermeiden, dass die nachfolgenden Behälter 140 auf den Stau "auffahren", werden die Steuervorrichtungen 112A, 112B über den Bus 144 so angesteuert, dass die Geschwindigkeiten der vorgeschalteten Fördersegmente um so geringer eingestellt werden, je näher diese Fördersegmente dem Stausegment S6 sind.

Wenn man davon ausgeht, dass ein weit stromaufliegendes Fördersegment mit seiner Nenngeschwindigkeit fördert (v₁ = v_{N}), dann werden folglich die dazwischenliegenden Fördersegmente S2 bis S5 auf jeweilige Geschwindigkeiten eingestellt, die jeweils geringer sind als die des stromaufliegenden Fördersegmentes. Dadurch wird erreicht, dass die Geschwindigkeit der Behälter 114 von dem mit Nenndrehzahl fördernden Segment S1 bis auf das Stausegment S6 allmählich verringert wird. Hierdurch wird bereits im Vorfeld vermieden, dass es zu einem Start/Stopp-Betrieb der Behälter 140 kommt.

Dies wird erreicht, indem der Durchsatz bei jedem Segment berechnet wird. Es erfolgt eine Auswertung und Signalisierung an die dahinter liegenden Segmente zur automatischen Reduzierung/Anpassung der Fördergeschwindigkeit. Diese Anpassung der Fördergeschwindigkeit soll sich dynamisch gegen die Förderrichtung fortpflanzen.

Voraussetzung hierfür ist natürlich, dass sich die Drehzahl der motorbetriebenen Förderrollen 10 in einem möglichst breiten Bereich frei einstellen lässt (z.B. 0,3 bis 2 m/sek). Dabei ist die Geschwindigkeitsregelung der Steuereinheiten 120 weitgehend lastunabhängig.

Hierdurch ergibt sich eine Maximierung des Durchsatzes. Ein Auffahren von Behältern wird verhindert. Der Verschleiß, der üblicherweise durch den Start/Stopp-Betrieb hervorgerufen wird, wird verringert. Ferner ergibt sich ein geringerer Energiebedarf und eine geringere Lärmentwicklung.

## Patentansprüche

1. Motorbetriebene Förderrolle (10) für Förderanlagen (129) zum Fördern von Behältern (140), Paletten etc., mit einem hohlen Rollenkörper (12), der in Bezug auf ein Gestell (13) drehbar gelagert ist und innerhalb dessen eine gestellfeste Antriebseinheit (30) angeordnet ist, deren Abtriebswelle (46) über eine Andruckeinheit (32) kraftschlüssig mit dem Innenumfang des Rollenkörpers (12) verbunden ist, wobei die Andruckeinheit (32) eine erste und eine zweite Scheibe (70, 72) aufweist, in die ein elastischer Anpressring (76) eingelegt ist, **dadurch gekennzeichnet, dass** die erste und zweite Scheibe (70, 72) außenumfänglich eine v-Form (74) definieren, in die der Anpressring eingelegt ist.

2. Motorbetriebene Förderrolle nach Anspruch 1, wobei an dem Rollenkörper (12) oder einem damit verbundenen Bauteil (14) außenumfänglich wenigstens ein W-förmiges Umfangsprofil (106, 108) ausgebildet ist, um das ein Poly-V-Riemen (102, 104) gelegt werden kann.

3. Motorbetriebene Förderrolle nach Anspruch 2, wobei das Umfangsprofil eine Doppel-w-Form (106, 108) aufweist, um zwei Poly-V-Riemen (102, 104) aufnehmen zu können.

4. Motorbetriebene Förderrolle nach Anspruch 2 oder 3, **dadurch gekennzeichnet, dass** das Bauteil (14) eine Buchse (14) ist, die in ein Ende des Rollenkörpers (12) eingesteckt und damit starr verbunden ist.

5. Motorbetriebene Förderrolle nach einem der Ansprüche 2 bis 4, wobei das Bauteil (14) aus Kunststoff hergestellt ist.

6. Motorbetriebene Förderrolle nach einem der Ansprüche 1 bis 5, wobei die Antriebseinheit (30) einen elektrischen Motor (42) und ein Getriebe (44) aufweist, dessen Eingang mit der Abtriebswelle (51) des elektrischen Motors (42) verbunden ist und dessen Abtriebswelle (46) mit der Andruckeinheit (32) drehfest verbunden ist.

7. Motorbetriebene Förderrolle nach Anspruch 6, wobei die Abtriebswelle (46) des Getriebes (44) als Konuszapfen mit einem Innengewinde ausgebildet ist.

8. Motorbetriebene Förderrolle nach Anspruch 1, wobei die Scheiben (70, 72) auf die außenumfänglich konische Abtriebswelle (46) des Getriebes (44) gesteckt sind und eine in deren Innengewinde geschraubte Schraube (78) die Scheiben (70, 72) an der Abtriebswelle (46) festlegt und den Anpressring (76) hierbei radial gegen den Innenumfang des Rollenkörpers drückt.

9. Motorbetriebene Förderrolle nach Anspruch 6 oder 7, wobei der elektrische Motor (42) ein bürstenloser Gleichstrommotor (42) ist.

10. Motorbetriebene Förderrolle nach Anspruch 9, wobei der elektrische Motor (42) in den Rotor integrierte Magnete aufweist.

11. Motorbetriebene Förderrolle nach einem der Ansprüche 1 bis 10, wobei die Antriebseinheit (30) einen elektrischen Motor (42) aufweist, dessen Drehzahl innerhalb eines bestimmten Drehzahlbereiches einstellbar ist.

12. Motorbetriebene Förderrolle nach einem der Ansprüche 1 bis 11, wobei die Antriebseinheit (30) ein Getriebe (44) aufweist, das eine feste Übersetzung aufweist.

13. Motorbetriebene Förderrolle nach einem der Ansprüche 1 bis 12, wobei die Antriebseinheit (30) ein Getriebe (44) aufweist, das einen Planetenradsatz mit einem Hohlrad (52) aus Kunststoff und Planetenrädern (54) aus Messing aufweist.

14. Motorbetriebene Förderrolle nach Anspruch 13, wobei das Hohlrad (52) schräg verzahnt ist.

15. steuervorrichtung mit einer motorbetriebenen Förderrolle (10) nach einem der Ansprüche 1 bis 14, mit einem Gehäuse (114), mit einer Schnittstelle für den elektrischen Motor (A2) der motorbetriebenen Förderrolle (10), mit einer Steuereinheit (120) zum Ansteuern des elektrischen Motors (42) und mit einem Wechselstrom/Gleichstrom-Wandler (116) zum Umwandeln einer Netzspannung in eine Gleichspannung zur versorgung der Steuereinheit (120).

16. Steuervorrichtung nach Anspruch 15, wobei in dem Gehäuse (114) eine Mehrzahl von Steuereinheiten (120) zum Ansteuern jeweiliger elektrischer Motoren (42) einer entsprechenden Mehrzahl von Förderrollen (10) angeordnet ist, wobei die Steuereinheiten (120) von dem Wechselstrom/Gleichstrom-Wandler (116) versorgt werden.

17. Steuervorrichtung nach Anspruch 15 oder 16, wobei jede Steuereinheit (120) jeweils einen Kodierschalter (122) zur Einstellung der Drehzahl des elektrischen Motors (42) auf einen festen wert aufweist.

18. Steuervorrichtung nach einem der Ansprüche 15 bis 17, wobei an dem Gehäuse (114) eine Busschnittstelle (118) vorgesehen ist, die mit der bzw. den Steuereinheit(en) (120) in Verbindung steht.

19. steuervorrichtung nach Anspruch 18, wobei jede Steuereinheit (120) dazu ausgelegt ist, über die Busschnittstelle (118) eine Drehzahl zu empfangen und den jeweiligen elektrischen Motor (42) auf die empfangene Drehzahl einzustellen.

20. Steuervorrichtung nach einem der Ansprüche 15 bis 19, wobei jede Steuereinheit (120) einen Sensoreingang für einen Sensor (136) aufweist, der der jeweiligen Förderrolle (10) zugeordnet ist.

21. Steuervorrichtung nach Anspruch 20, wobei jede Steuereinheit (120) dazu ausgelegt ist, den zugeordneten elektrischen Motor (42) in Abhängigkeit von einem Sensorsignal von dem Sensor (136) an- und abzuschalten.

22. Steuervorrichtung nach Anspruch 21, wobei jede Steuereinheit (120) dazu ausgelegt ist, den zugeordneten elektrischen Motor (42) bei Empfang eines Sensorsignals von dem Sensor (136) anzuschalten.

23. Steuervorrichtung nach Anspruch 21 oder 22, wobei jede Steuereinheit (120) dazu ausgelegt ist, den zugeordneten elektrischen Motor (42) eine vorbestimmte oder eine einstellbare Zeitspanne nach Empfang eines Sensorsignals von dem Sensor (136) abzuschalten.

24. Steuervorrichtung nach einem der Ansprüche 21 bis 23, wobei jede Steuereinheit (120) dazu ausgelegt ist, bei einem Blockieren der zugeordneten Förderrolle (10) den elektrischen Motor (42) abzuschalten.

25. Steuervorrichtung nach Anspruch 24, wobei jede Steuereinheit (120) dazu ausgelegt ist, eine vorbestimmte Zeitdauer nach Abschalten des elektrischen Motors (42) auf Grund einer Blockade der Förderrolle (10) den elektrischen Motor (42) wieder einzuschalten.

26. Steuervorrichtung nach Anspruch 25, wobei die vorbestimmte Zeitdauer im Bereich von 0,5 bis 10 Sekunden, vorzugsweise im Bereich von 2 bis 5 Sekunden liegt.

27. Steuervorrichtung nach einem der Ansprüche 15 bis 26, wobei jede Steuereinheit (120) einen Störausgang (119) zur Verbindung mit einer übergeordneten Steueranlage aufweist.

28. Rollenförderanlage mit einer Mehrzahl von Fördersegmenten (S), die jeweils wenigstens eine motorgetriebene Förderrolle (10) nach einem der Ansprüche 1 bis 14 und ggf. eine oder mehrere Leerlaufrollen (130) aufweisen, die mit der motorgetriebenen Förderrolle (10) gekoppelt sind, und mit einer Steuervorrichtung nach einem der Ansprüche 15 bis 27.

29. Verfahren zum Steuern einer Rollenförderanlage nach Anspruch 28, die eine Mehrzahl von hintereinander liegenden Fördersegmenten (S) aufweist, die eine Förderrichtung (142) definieren, wobei die Drehzahl der Fördersegmente jeweils unabhängig voneinander in Stufen oder stufenlos einstellbar ist, und wobei bei Auftreten eines Staus in einem Fördersegment (S) die Drehzahlen der in Förderrichtung stromauf liegenden Fördersegmente (S) umso geringer eingestellt werden, je näher die Fördersegmente (5) dem Fördersegment sind, in dem der Stau auftritt.

## Claims

1. A motor-driven conveying roller (10) for conveying containers (130), pallets, etc. in a conveying system, comprising a hollow roller body (12), which is rotatably mounted with respect to a frame (13) and within which a drive unit (30) is arranged non-rotatably relative to the frame, an output shaft (46) thereof being frictionally connected to an inner circumference of said roller body (12) via a pressure-exerting unit (32), wherein the pressure-exerting unit (32) includes first and second disks (70, 72) into which an elastic pressing ring (76) is placed, **characterized in that** the first and second disks (70, 72) define on an outer circumference a V-shape (74) into which the pressing ring is placed.

2. The motor-driven conveying roller of claim 1, wherein at least one W-shaped circumferential profile is formed on said roller body (12) or on a component (14) being connected thereto, around which a poly-V belt (102, 104) is placeable.

3. The motor-driven conveying roller of claim 2, wherein the circumferential profile has a double-W shape (106, 108) for receiving two poly-V (102, 104) belts.

4. The motor-driven conveying roller of claim 2 or 3, **characterized in that** the component (14) is a bush (14), which is inserted into an end of the roller body (12) and is rigidly connected thereto.

5. The motor-driven conveying roller of any of claims 2 to 4, wherein the component (14) is made of plastic.

6. The motor-driven conveying roller of any of claims 1 to 5, wherein the drive unit (30) includes an electric motor (42) and a gear mechanism (44), an input of which is connected to the output shaft (51) of the electric motor (42) and an output shaft (46) of which is connected in a rotationally fixed manner to the pressure-exerting unit (32).

7. The motor-driven conveying roller of claim 6, wherein the output shaft (46) of the gear mechanism (44) is formed as a conical pin having an inside thread.

8. The motor-driven conveying roller of claim 1, wherein the disks (70, 72) are fitted onto the conical output shaft (46) of the gear mechanism (44) circumferentially, and wherein a screw (78) being screwed into the inside thread fixes the disks (70, 72) at the output shaft (46) and, thereby, presses the pressing ring (76) against the inner circumference of the roller body.

9. The motor-driven conveying roller of claims 6 or 7, wherein the electric motor (42) is a brushless DC motor (42).

10. The motor-driven conveying roller of claim 9, wherein the electric motor (42) has magnets integrated into the rotor.

11. The motor-driven conveying roller of any of claims 1 to 10, wherein the drive unit (30) has an electric motor (42), a rotational speed of which is adjustable within a specific rotational speed range.

12. The motor-driven conveying roller of any of claims 1 to 11, wherein the drive unit (30) includes a gear mechanism (44), which has a fixed transmission ratio.

13. The motor-driven conveying roller of any of claims 1 to 12, wherein the drive unit (30) includes a gear mechanism (44), which has a set of planetary gears having an internal gear (52) made of plastic, and planetary gears (54) made of brass.

14. The motor-driven conveying roller of claim 13, wherein the internal gear (52) is helically toothed.

15. A control device for a motor-driven conveying roller (10) of any of claims 1 to 14, comprising a housing (114), an interface for the electric motor (42) of the motor-driven conveying roller (10), a controlling unit (120) for driving the electric motor (42), and a AC/DC converter (116) for converting a mains voltage into a DC voltage for supplying the controlling unit (120).

16. The controlling device of claim 15, wherein a plurality of controlling units (120) for respectively controlling electric motors (42) of a corresponding plurality of conveying rollers (10) is arranged in the housing (114), wherein the controlling units (120) are fed by the AC/DC converter (116).

17. The controlling device of claim 15 or 16, wherein each controlling unit (120) respectively has a coding switch (122) for setting the rotational speed of the electrical motor (42) to a fixed value.

18. The controlling device of any of claims 15 to 17, wherein a bus interface (118) is provided at the housing (114), the bus interface being connected to the controlling unit and controlling units (120), respectively.

19. The controlling device of claim 18, wherein each controlling unit (120) is adapted to receive a rotational speed through the bus interface (116) and set the respective electric motor (42) to the received rotational speed.

20. The controlling device of any of claims 15 to 19, wherein each controlling unit (120) has a sensor input for a sensor (136) which is associated to the respective conveying roller (10).

21. The controlling device of claim 20, wherein each controlling unit (120) is adapted to turn on and turn off the associated electric motor (42) in dependence on a sensor signal of the sensor (136).

22. The controlling device of claim 21, wherein each controlling unit (120) is adapted to turn on the associated electric motor (42) upon receipt of a sensor signal of the sensor (136).

23. The controlling device of claim 21 or 22, wherein each controlling unit (120) is adapted to turn off the associated electric motor (42) for a predetermined or adjustable period of time after the receipt of a sensor signal from the sensor (136).

24. The controlling device of one of claims 21 to 23, wherein each controlling unit (120) is adapted to turn off the electrical motor (42) upon blocking of the associated conveying roller (10).

25. The controlling device of claim 24, wherein each controlling unit (120) is adapted to turn on again the electric motor (42) for a predetermined period of time after turning off the electrical motor (42) due to a blocking of the conveying roller (10).

26. The controlling device of claim 25, wherein the predetermined period of time is in the range of 0.5 to 10 seconds, preferably within the range of 2 to 5 seconds.

27. The controlling device of any of claims 15 to 26, wherein each controlling unit (120) has a disturbance output (119) for connection to a super-ordinated controlling system.

28. A roller conveying system having a plurality of conveying segments (S) each of which has at least one motor-driven conveying rollers (10) of any of the claims 1 to 14 and, if necessary, one or more idle rollers (130) which are coupled to the motor-driven conveying roller (10), and having a controlling device of one of claims 15 to 27.

29. A method for controlling the roller conveying system of claim 28, which has a plurality of subsequently arranged conveying segments S defining a conveying direction 142, wherein the rotational speed of the conveying segments is settable in steps or stepless, respectively independent of each other, and wherein the rotational speeds upon occurrence of an accumulation in the conveying segment (S) of the conveying segments (S) in an upstream conveying direction is set.

## Revendications

1. Rouleau de transport motorisé (10) pour des installations de transport (129), pour le transport de conteneurs (140), palettes, etc., avec un corps de rouleau creux (12), monté pivotant sur un cadre (13) et à l'intérieur duquel est disposée une unité d'entraînement (30) fixe par rapport au cadre, dont l'arbre de sortie (46) est raccordé sous l'effet d'une force exercée par une unité de serrage (32) à la circonférence intérieure du corps de rouleau (12), l'unité de serrage (32) comportant un premier et un deuxième disques (70, 72) entre lesquels une bague de serrage élastique (76) est mise en place, **caractérisé en ce que** le premier et le deuxième disques (70, 72) définissent une forme en V (74) par leur circonférence extérieure, dans laquelle est logée la bague de serrage.

2. Rouleau de transport motorisé selon la revendication 1, **caractérisé en ce que** au moins un profil de contour en forme de W (106, 108) est formé à la circonférence extérieure du corps de rouleau (12) ou sur un composant (14) raccordé à celui-ci, autour duquel une courroie striée en V (102, 104) peut être mise en place.

3. Rouleau de transport motorisé selon la revendication 2, **caractérisé en ce que** le profil de contour présente une forme en double W (106, 108) pour le logement de deux courroies striées en V (102, 104).

4. Rouleau de transport motorisé selon la revendication 2 ou 3, **caractérisé en ce que** le composant (14) est un manchon fiché dans une extrémité du corps de rouleau (12), auquel il est fixement raccordé.

5. Rouleau de transport motorisé selon l'une des revendications 2 à 4, **caractérisé en ce que** le composant (14) est fabriqué en matière synthétique.

6. Rouleau de transport motorisé selon l'une des revendications 1 à 5, **caractérisé en ce que** l'unité d'entraînement (30) comporte un moteur électrique (42) et un engrenage (44) dont l'entrée est raccordée à l'arbre de sortie (51) du moteur électrique (42), et dont l'arbre de sortie (46) est raccordé fixement en rotation à l'unité de serrage (32).

7. Rouleau de transport motorisé selon la revendication 6, **caractérisé en ce que** l'arbre de sortie (46) de l'engrenage (44) est réalisé comme tourillon conique avec un filet intérieur.

8. Rouleau de transport motorisé selon la revendication 1, **caractérisé en ce que** les disques (70, 72) sont fichés sur l'arbre de sortie (46) de circonférence extérieure conique de l'engrenage (44), et **caractérisé en ce que** une vis (78) serrée dans le filetage intérieur dudit arbre bloque les disques (70, 72) sur l'arbre de sortie (46) et serre ainsi radialement la bague de serrage (76) contre la circonférence intérieure du corps de rouleau.

9. Rouleau de transport motorisé selon la revendication 6 ou 7, **caractérisé en ce que** le moteur électrique (42) est un moteur à courant continu (42) sans balais.

10. Rouleau de transport motorisé selon la revendication 9, **caractérisé en ce que** le moteur électrique (42) comporte des aimants intégrés au rotor.

11. Rouleau de transport motorisé selon l'une des revendications 1 à 10, **caractérisé en ce que** l'unité d'entraînement (30) comporte un moteur électrique (42) dont la vitesse de rotation est réglable à l'intérieur d'une plage de vitesse définie.

12. Rouleau de transport motorisé selon l'une des revendications 1 à 11, **caractérisé en ce que** l'unité d'entraînement (30) comporte un engrenage (44) présentant un rapport de transmission fixe.

13. Rouleau de transport motorisé selon l'une des revendications 1 à 12, **caractérisé en ce que** l'unité d'entraînement (30) comporte un engrenage (44) présentant un jeu de roues planétaires, avec une roue creuse (52) en matière synthétique et des roues planétaires (54) en laiton.

14. Rouleau de transport motorisé selon la revendication 13, **caractérisé en ce que** la roue creuse (52) est à denture oblique.

15. Dispositif de commande avec un rouleau de transport motorisé (10) selon l'une des revendications 1 à 14, avec un carter (114), avec une interface pour le moteur électrique (42) du rouleau de transport motorisé (10), avec une unité de commande (120) pour la commande du moteur électrique (42) et avec un transformateur courant alternatif/courant continu (116) pour la transformation d'une tension de réseau en une tension continue pour l'alimentation de l'unité de commande (120).

16. Dispositif de commande selon la revendication 15, **caractérisé en ce que** une pluralité d'unités de commande (120) pour la commande de moteurs électriques (42) correspondants d'une pluralité de rouleaux de transport (10) est disposée dans le carter (114), les unités de commande (120) étant alimentées par le transformateur courant alternatif/courant continu (116).

17. Dispositif de commande selon la revendication 15 ou 16, **caractérisé en ce que** chaque unité de commande (120) présente un commutateur de codage (122) correspondant pour le réglage à une valeur fixe de la vitesse de rotation du moteur électrique (42).

18. Dispositif de commande selon l'une des revendications 1 5 à 17, **caractérisé en ce que** un port de bus (118) est prévu sur le carter (114), lequel est raccordé à l'unité ou aux unités de commande (120).

19. Dispositif de commande selon la revendication 18, **caractérisé en ce que** chaque unité de commande (120) est conçue pour recevoir une vitesse de rotation via le port de bus (118) et régler le moteur électrique correspondant (42) à la vitesse de rotation reçue.

20. Dispositif de commande selon l'une des revendications 15 à 19, **caractérisé en ce que** chaque unité de commande (120) comporte une entrée de capteur pour un capteur (136) affecté au rouleau de transport (10) correspondant.

21. Dispositif de commande selon la revendication 20, **caractérisé en ce que** chaque unité de commande (120) est conçue pour mettre en marche et couper le moteur électrique (42) qui lui est affecté en fonction d'un signal du capteur (136).

22. Dispositif de commande selon la revendication 21, **caractérisé en ce que** chaque unité de commande (120) est conçue pour mettre en marche le moteur électrique (42) qui lui est affecté à la réception d'un signal du capteur (136).

23. Dispositif de commande selon la revendication 21 ou 22, **caractérisé en ce que** chaque unité de commande (120) est conçue pour couper le moteur électrique (42) qui lui est affecté à l'issue d'un intervalle de temps défini ou réglable suivant la réception d'un signal du capteur (136).

24. Dispositif de commande selon l'une des revendications 21 à 23, **caractérisé en ce que** chaque unité de commande (120) est conçue pour couper le moteur électrique (42) lors d'un blocage du rouleau de transport (10) qui lui est affecté.

25. Dispositif de commande selon la revendication 24, **caractérisé en ce que** chaque unité de commande (120) est conçue pour remettre en marche le moteur électrique (42) à l'issue d'un intervalle de temps défini suivant l'arrêt du moteur électrique (42) en raison d'un blocage du rouleau de transport (10).

26. Dispositif de commande selon la revendication 25, **caractérisé en ce que** l'intervalle de temps défini est compris dans une plage de 0,5 à 10 secondes, de préférence dans une plage de 2 à 5 secondes.

27. Dispositif de commande selon l'une des revendications 15 à 26, **caractérisé en ce que** chaque unité de commande (120) comporte une sortie d'erreur (119) pour la connexion à une installation de commande supérieure.

28. Système de rouleaux de transport avec une pluralité de segments de transport (S) comportant chacun au moins un rouleau de transport motorisé (10) selon l'une des revendications 1 à 14 et le cas échéant un ou plusieurs rouleaux mobiles (130) couplés au rouleau de transport motorisé (10), et avec un dispositif de commande selon l'une des revendications 15 à 27.

29. Procédé de commande d'un système de rouleaux de transport selon la revendication 28, comportant une pluralité de segments de transport (S) consécutifs définissant une direction de transport (142), **caractérisé en ce que** la vitesse de rotation de chaque segment de transport étant indépendamment réglable par degrés ou de manière continue, et **caractérisé en ce que**, à l'apparition d'un bourrage dans un segment de transport (S), les vitesses de rotation des segments de transport (S) sur le courant dans la direction de transport étant réglées d'autant plus réduites que les segments de transport (S) sont proches du segment de transport (S) **caractérisé en ce que** le bourrage est survenu.
